# EUROPEAN PATENT APPLICATION

(11) **EP 0 944 044 A2**
(43) Date of publication of application: **22.09.1999**
(21) Application number: 99105547.6
(22) Date of filing: 18.03.1999
(51) Int. Cl.: G11B 5/72

(54) **Magnetic recording medium and method of manufacturing magnetic recording medium**

(30) Priority: 19.03.1998 JP 7070498
(71) Applicant: SONY CORPORATION, Tokyo (JP)
(72) Inventor: Kobayashi, Ken c/o Sony Corporation, Tokyo (JP); Kishii, Noriyuki c/o Sony Corporation, Tokyo (JP); Kamei, Takahiro c/o Sony Corporation, Tokyo (JP); Kurihara, Kenichi c/o Sony Corporation, Tokyo (JP); Iwamoto, Yutaka c/o Sony Corporation, Tokyo (JP); Matsuzawa, Nobuyuki c/o Sony Corporation, Tokyo (JP); Kawana, Takahiro c/o Sony Corporation, Tokyo (JP); Mori, Takao c/o Sony Corporation, Tokyo (JP); Yamada, Yukari c/o Sony Corporation, Tokyo (JP)
(74) Representative: MÜLLER & HOFFMANN Patentanwälte

(57) **Abstract**

A magnetic recording medium which is capable of maintaining an excellent lubricating characteristic under a variety of conditions for use. maintaining a lubricating effect for a long time and having an excellent movement characteristic, wear resistance and durability. The magnetic recording medium according to the present invention incorporates: a non-magnetic support member; and a thin-film layer formed on the non-magnetic support member, the thin-film layer incorporates at least a magnetic layer, wherein the thin-film layer contains a lubricant which is monoester monocarboxylic acid expressed by General Formula (1): 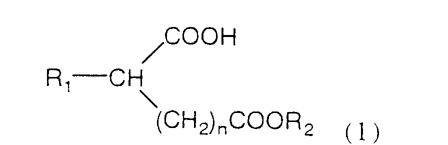 where R₁ is an aliphatic alkyl group or an aliphatic alkenyl group, R₂ is a fluoroalkyl group, a fluoroalkenyl group, an aliphatic alkyl group or an aliphatic alkenyl group and n is 0 or a positive integer.

## Description

### BACKGROUND OF THE INVENTION

### Field of the Invention

The present invention relates to a magnetic recording medium incorporating a non-magnetic support member on which at least a magnetic layer is formed.

### Description of the Related Art

A so-called thin metal type magnetic recording medium has a magnetic layer formed by applying a ferromagnetic metal material to a non-magnetic support member. A coating type magnetic recording medium has a magnetic layer formed by coating a non-magnetic support member with a magnetic coating material containing magnetic particles and a binder. To reduce a spacing loss of each of the foregoing magnetic recording mediums, the surface of each mediums is considerably smoothed. If the surface of the medium is smoothed considerably, areas of substantial contact with sliding members, such as the magnetic head and the guide rollers, are enlarged excessively. Therefore, the friction coefficient of the surface of the medium is enlarged excessively. If the friction coefficient of the surface of the medium is enlarged. an adhesion phenomenon easily occurs so that, for example, the magnetic recording medium adheres to the sliding member. As a result, there arises a problem in that the movement smoothness and durability of the magnetic recording medium deteriorate.

To overcome the above-mentioned problem. use of any one of a variety of lubricants for the magnetic recording medium has been investigated. Hitherto, an attempt has been made to reduce the friction coefficient of the surface of the magnetic recording medium. For example, a lubricant comprising higher fatty acid or higher fatty acid ester is contained in the magnetic coating material for the coating-type magnetic recording medium. Another attempt has been made that the surface of the thin-film type magnetic recording medium is top-coated with a lubricant.

The lubricant for use in the magnetic recording medium must have excellent characteristics. For example, excellent resistance against low temperatures is required to maintain the lubricating effect even if the magnetic recording medium is used in a cold climate. Another requirement is that the lubricant can be applied very thinly to reduce a spacing from the magnetic head without deterioration in the lubricating characteristic. Moreover, there is a necessity for the lubricant that it can be used for a long time and a long term without deterioration in the lubricating effect.

As a lubricant which meets the above-mentioned characteristics. alkyl succinate containing fluorine expressed by General Formula (2) has been reported. 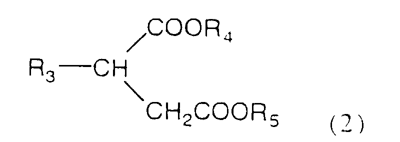 where R₃ is an aliphatic alkyl group or an aliphatic alkenyl group, either of R₄ or R₅ is a fluoroalkyl ether group, the other one is a fluoroalkyl group, a fluoroalkenyl group, a fluorophenyl group, an aliphatic alkyl group or an aliphatic alkenyl group.

The alkyl succinate containing fluorine expressed by General Formula (2) has a problem of a large friction coefficient. As described above, a lubricant which is capable of satisfying all of the various characteristics cannot be obtained.

### SUMMARY OF THE INVENTION

In view of the foregoing, an object of the present invention is to provide a magnetic recording medium having an excellent lubricating characteristic which can be maintained even under a variety of conditions for use, a lubricating effect which can be maintained for a long time and a satisfactory movement characteristic, wear resistance and durability.

A magnetic recording medium according to the present invention comprises: a non-magnetic support member: and a thin-film layer formed on the non-magnetic support member the thin-film layer incorporates at least a magnetic layer, wherein the thin-film layer contains a lubricant which is monoester monocarboxylic acid expressed by General Formula (1): 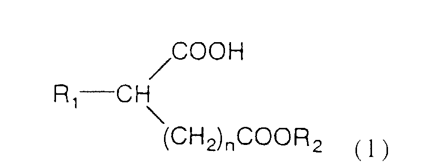 where R₁ is an aliphatic alkyl group or an aliphatic alkenyl group, R₂ is a fluoroalkyl group, a fluoroalkenyl group an aliphatic alkyl group or an aliphatic alkenyl group and n is 0 or a positive integer.

The magnetic recording medium according to the present invention contains the lubricant which is the monoester r monoc arboxylic acid expressed by General Formula (1). Therefore, change of the layer can be prevented for a long time, that is, the lubricating effect can be maintained for a long time. Since the monoester monocarboxylic acid expressed by General Formula (1) can be applied by using hydrocarbon solvents, any adverse influence is not exerted on the environment.

Other objects, features and advantages of the invention will be evident from the following detailed description of the preferred embodiments described in conjunction with the attached drawings.

### BRIEF DESCRIPTION OF THE DRAWING

Fig. 1 is a cross sectional view showing an example of the structure of a magnetic recording medium according to the present invention ;
Fig. 2 is a graph showing an infrared spectrum of a lubricant contained in a magnetic tape according to Example 10 ; and
Fig. 3 is a graph showing an infrared spectrum of a lubricant contained in a magnetic tape according to a Comparative Example 6.

### DESCRIPTION OF THE PREFERRED EMBODIMENTS

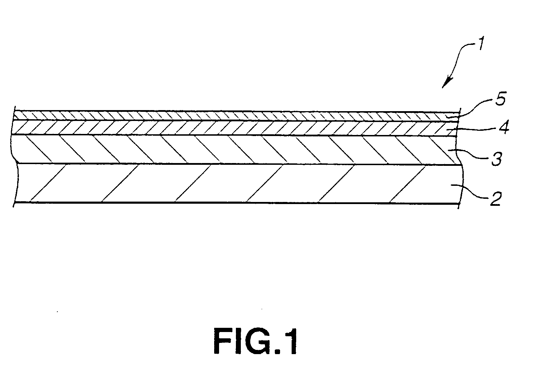

An example of the structure of a magnetic recording medium according to the present invention is shown in Fig. 1. The magnetic recording medium 1 is a so-called thin-metal-type magnetic recording medium having a magnetic layer formed by coating a non-magnetic support member with a ferromagnetic metal material by evaporation or the like. The magnetic recording medium 1 incorporates a non-magnetic support member 2, a metal magnetic film 3 formed on the non-magnetic support member 2, a protective film 4 formed on the metal magnetic film 3 and a lubricant layer 5 formed on the protective film 4.

The non-magnetic support member 2 is made of a known material which has been employed to make the non-magnetic support member of a magnetic recording medium. The non-magnetic support member 2 is made of, for example, polyethylene terephthalate or constituted by an aluminum alloy plate or a glass plate. When the non-magnetic support member 2 is constituted by a rigid material, such as the aluminum alloy plate or the glass plate, the surface of the substrate may be hardened by an oxide film formed by an alumite process or a Ni-P film.

The metal magnetic film 3 is a continuous film formed on the non-magnetic support member 2 by a so-called physical evaporation (PVD: Physical Vapor Deposition) method, such as plating, sputtering or vacuum evaporation. The metal magnetic film 3 is an inplane magnetic film or a vertic ally-magnetized film.

The inplane magnetic film is made of a ferromagnetic metal material, such as a metal material exemplified by Fe. Co and Ni. As an alternative to this, any one of the following alloy may be employed: Co-Nialloy. Co-Pt alloy; Co-Pt-Ni alloy: Fe-Co alloy: Fe-Ni alloy: Fe-CoNi alloy: Fe-Ni-B alloy: Fe-Co-B alloy and Fe-Co-Ni-B alloy. When the enplane magnetic film is formed, it is preferable that a base layer is previously formed on the non-magnetic support member 2, the base layer being made of a low melting point non-magnetic material, such as Bi, Sb, Pb, Sn, Ga, In, Ge, Si or Tl. When the metal magnetic material is evaporated or sputtered in a vertical direction to form the metal magnetic film 3, the foregoing low melting point non-magnetic material is diffused. Thus, the orientation of the metal magnetic film 3 can be eliminated to maintain the inplane isotropy. More over, an antimagnetic characteristic can be improved.

The ferromagnetic metal material for forming the vertically- magnetized film may be, for example, a Co-Cr alloy.

The protective film 4 is formed by coating the metal magnetic film 3 with carbon by a CVD (Chemical Vapor Deposition) method or the like. It is preferable that the thickness of the protective film 4 is nm to 100 nm, more preferably 5 nm to 30 nm. If the thickness of the protective film 4 is too small, the durability of the protective film 4 deteriorates. If the thickness of the protective film 4 is too large, a sufficiently large output to perform a short wavelength recording operation cannot be obtained.

The lubricant layer 5 is formed on the protective film 4 by applying a lubricant dissolved in solvent. The lubricant layer 5 contains monoester monocarboxylic acid to serve as a lubricant. the monoester monocarboxylic acid being expressed by General Formula (1). 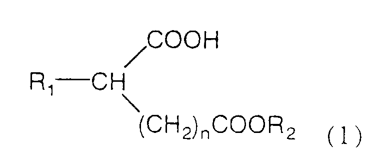 where R1 is an aliphatic alkyl group, an aliphatic alkenyl group, R2 is a fluoroalkyl group, a fluoroalkenyl group, an aliphatic alkyl group or an aliphatic alkenyl group and n is 0 or a positive integer.

When a monoester monocarboxylic acid compound serving as the lubricant is applied to the protective film 4, carboxylic acid or ester, which is the polar base of the lubricant molecule, is adsorbed to the surface of the protective film 4. The cohesive force between longchain hydrocarbon groups, which are the hydrophobic groups, causes the lubricant layer 5 to be formed.

The conventional lubricant made of a compound, such as carboxylic acid or amine, having relatively great polarity suffers from unsatisfactory still durability though the compound has a small friction coefficient. On the other hand, a compound, such as ester, having relatively small polarity suffers from an excessively large friction coefficient though the compound has excellent still movement resistance.

On the other hand, the monoester monocarboxylic acid compound expressed by General Formula (1) contains the polar bases which are carboxylic acid and ester. Therefore, the foregoing monoester monocarboxylic acid compound has a small friction coefficient and excellent still movement resistance.

It is preferable that the number of carbon atoms in the aliphatic alkyl group or the aliphatic alkenyl group contained in the monoester monocarboxylic acid compound expressed by General Formula (1) and represented by R₁ is 6 to 30, more preferably 10 to 21. If the number of carbon atoms is 5 or smaller, the length of the alkyl group is too long to realize satisfactory friction and wear resistance. If the number of carbon atoms is 31 or more, solubility with respect to the solvent required when the lubricant is applied to the surface of the protective film 4 deteriorates. In this case, the lubricant layer 5 cannot be formed on the protective film 4. When the number of carbon atoms is made to be 6 to 30, the solubility with respect to the solvent which is required when a coating operation is performed can be improved. Moreover, the friction and wear resistance can be improved.

It is preferable that the number of carbon atoms in the fluoroalkyl group, the fluoroalkenyl group, the aliphatic alkyl group or the aliphatic alkenyl group contained in the monoester monocarboxylic acid compound expressed by General Formula (1) and represented by R2 is 6 to 30, more preferably 6 to 21. If the number of carbon atoms is 5 or smaller, the length of the alkyl group is too short to maintain the friction and wear resistance. If the number of carbon atoms is 31 or larger, solubility with respect to solvent which is required when the lubricant is applied to the protective film 4 deteriorates. Thus, the lubricant layer 5 cannot be formed on the protective film 4. When the number of carbon atoms is made to be 6 to 30, the solubility with respect to the solvent which is required when the lubricant is applied to the protective film 4 can be improved. Moreover, the friction and wear resistance can be improved.

It is preferable that the number of carbon atoms of the intermediate hydrocarbon chain (-(CH₂)n-) of the monoester monocarboxylic acid compound expressed by General Formula (1) is 0 to 20 more preferably 0 to 14. If the number of carbon atoms is 21 or larger, the solubility with respect to the solvent which is required when the lubricant is applied to the protective film 4 deteriorates. Thus, the lubricant layer 5 cannot be formed on the protective film 4. When the number of carbon atoms is made to be 0 to 20, the solubility with respect to the solvent which is required when the lubricant is applied to the protective film 4 can be improved.

The lubricant layer 5 is formed by applying the lubricant dissolved in the solvent to the protective film 4. The conventional lubricant containing fluorine is not dissolved in hydrocarbon solvent, such as toluene or acetone. Therefore, a fluorine solvent having solubility is required to apply the conventional lubricant containing fluorine, causing an adverse influence to be exerted on the environment. However, the monoester monocarboxylic acid compound expressed by General Formula (1) containing fluorine can be dissolved in hydrocarbon solvent, such as toluene or acetone. Therefore, the applying operation can be performed by using the hydrocarbon solvent. As a result, an adverse influence on the environment can be eliminated.

It is preferable that the quantity of application of the lubricant is 0.5 mg/m² to 100 mg/m², more preferably 1 mg/m² to 20 mg/m².

If the quantity of the applied lubricant is smaller than 0.5 mg/m², satisfactory effects of reducing the friction coefficient of the surface of the medium and improving the shuttle durability cannot be obtained. If the quantity of the applied lubricant is larger than 100 mg/m², the lubricant is deposited to the surface of the medium or the lubricant adheres to the head, causing the head to be contaminated. As a result, movement smoothness of the magnetic recording medium deteriorates. When the quantity of the applied lubricant is made to be 0.5 mg/m² to 100 mg/m², the friction coefficient of the magnetic recording medium 1 can be reduced. Moreover, the shuttle durability can be improved.

The lubricant layer 5 may be used together with a rust preventive material. The rust preventive material may be a known material as a rust preventive material for a magnetic recording medium of the foregoing type. Specifically, the rust preventive material may be phenol, naphthol, quinone, a heterocyclic compound containing a nitrogen atom, a heterocyclic compound containing an oxygen atom or a heterocyclic compound containing a sulfur atom.

The rust preventive material may be added to the coating material when the lubricant is applied or a rust preventive material layer may be formed individually from the lubricant layer 5. When the rust preventive material layer is formed, the rust preventive material layer is formed on the protective film 4. Then, the lubricant layer 5 is formed. Since the rust preventive material layer and the lubricant layer 5 are formed into individual layers, the rust preventive effect and the lubricating effect can furthermore be improved.

It is preferable that the present invention is applied to a so-called thin metal film magnetic recording medium 1 incorporating a magnetic layer which is a metal magnetic film formed on the surface of the non-magnetic support member 2 by evaporation or the like, and a protective film formed on the magnetic layer. The present invention is not limited to this. The present invention may be applied to a coating type magnetic recording medium. The magnetic recording medium 1 may have a base layer which is formed between the non-magnetic support member 2 and the metal magnetic film 3. A backcoating layer may be formed on the surface opposite to the surface of the magnetic recording medium 1 on which the metal magnetic film 3 has been formed.

### Examples

### Preparation of Monoester Monocarboxylic Acid

Initially, monoester monocarboxylic acid was prepared as follows: C₈H₁₇CH(COOH)CH₂COOC_{1 1}H₂₂C₈F₁₇ which was Compound 13 was prepared as the monoester monocarboxylic acid by the follow ing method.

Initially, 15.0 g of 9-undeccen-1 ol (CH₂ = CH(CH₂)₉OH) and 55.6 g perfluorooctyl iodide (F(CF₂)₈₁) were injected into a frask and then a nitrogen bubbling operation was performed.

Then, 0.05 g AIBN (2,2-Azobisisobutyronitrile) was added, and then heat refluxing reactions were performed for 8 hours. After the reactions were completed, vacuum distillation was perfomed to remove the raw material. Thus, a residue was obtained which was 56 g of (F(CF₂)₈CH₂CH1(CH₂)₉(OH).

Then, 56 g of obtained (F(CF₂)₈CH₂CH1(CH₂)₉(OH) was dissolved in 400 cc of ethanol, and then 40 cc of concentrated hydrochloric acid was added. Then, the solution was heated. Zinc powder in a total quantity of 6 g was added by performing an operation for adding the same in a small quantity, and then a refluxing operation was performed for two hours. Then, 20 cc of concentrated hydrochloric acid was added, and then a refluxing operation was performed for one hour. After the reactions were completed, the solution in a hot state was filtered. Then, the filtrate was concentrated. The concentrated reaction mixture was added with 10 % sodium hydroxide in a quantity of 200 cc, and then the solution was stirred. Then, obtained precipitation was separated by filtration, and then the precipitation was dried. As a result, 37 g of (F(CF₂)₈CH₂CH₂(CH₂)₉(OH) was obtained.

Then, 37 g of obtained (F(CF₂)₈CH₂CH₂(CH₂)₉(OH) and 40 g of n-octylsuccinate anhydride were dissolved in 400 cc of toluene. Then, concentrated sulphuric acid was added in a quantity required to serve as a catalyzer, and then a refluxing operation was performed for 3 hours. After the temperature of the solution was lowered, the solution was washed with water. Then magnesium sulfate was added, and then the obtained material was dried and concentrated. A column chromatography filled with silica gel was operated to remove the raw material by using toluene as eluting solution, and then the eluting solution was changed to ethyl acetate to elute a required substance. The ethyl acetate solution was concentrated so that 47 g of C₈H₁₇CH(COOH)CH₂COOC₁₁H₂₂C₈F₁₇ was obtained.

Although the method of preparing C₈H₁₇CH(COOH)CH₂COOC₁₁H₂₂C₈F₁₇ has been described, other monoester monocarboxylic acid shown in Tables 1 and 2 were prepared by similar methods.

**Table 1**

| Compounds | |
|---|---|
| 1 | C₁₆H₃₃CH(COOH)CH₂COOC ₁₆H₃₃ |
| 2 | C₁₈H₃₇CH(COOH)CH₂COOC₁₈H₃₇ |
| 3 | C₁₈H₃₇CH(COOH)CH₂COOC₂H₄C₆F₁₃ |
| 4 | C₁₈H₁₇CH(COOH)CH₂COOC₆H₁₂C₈F₁₇ |
| 5 | C₁₈H₃₇CH(COOH)CH₂COOC₁₁ H₂₂C₈F_{1 7} |
| 6 | C₁₈H₁₇CH(COOH)CH₂COOC₆H₁₂C₄F₈CF(C₃)₂ |
| 7 | C₁₀H₂₁CH(COOH)CH₂COOC₆H₁₂C₈F₁₇ |
| 8 | C₈H₁₇CH=CHC₇N₁₄CH(COOH)CH₂COOC ₂H₄C₈F₁₇ |
| 9 | C₁₈H₁₇CH(COOH)CH₂COOC₂H₄C₁₀F₂₁ |
| 10 | C₈H₁₇CH(COOH)CH₂COOC₁₈H₃₇ |
| 11 | C₈H₁₇CH(COOH)CH₂COOC₂H₄C₆F₁₃ |
| 12 | C₈H₁₇CH(COOH)CH₂COOC₆H₁₂C₈F₁₇ |
| 13 | C₈H₁₇CH(COOH)CH₂COOC₁₁H₂₂C₈F₁₇ |
| 14 | C₈H₁₇CH(COOH)CH₂COOC₁₁H₂₂C₆F₁₃ |
| 15 | C₁₈H₃₇CH(COOH)C₂H₄COOC₆H₁₂C₈F₁₇ |
| 16 | C₁₈H₃₇CH(COOH)C₆H₁₂COOC₆H₁₂C₈F₁₇ |
| 17 | C₁₈H₃₇CH(COOH)C ₁₀H₂₀COOC₆H₁₂C₈F₁₇ |
| 18 | C₁₈H₃₇CH(COOH)C₁₄H₂₈COOC₆H₁₂C₈F₁₇ |
| 19 | C₁₈H₃₇CH(COOH)C₂H₄COOC₈H₁₆CH=CHC₈F₁₇ |
| 20 | C₁₈H₃₇CH(COOH)C₂H₄COOCH₂CH=CHC₈F₁₇ |

**Table 2**

| Compounds | |
|---|---|
| 21 | CH₃(CH₂) ₁₀COOH |
| 22 | CH₃(CH₂)₁₂COOH |
| 23 | CH₃(CH₂)₁₅COOH |
| 24 | CH₃(CH₂)₁₈COOH |
| 25 | CH₃(CH₂)₂₀COOH |
| 26 | C₁₈H₃₇CH(COOC₁₂H₂₅)C₂H₄COOCH₂CF₂(OCF₂)p( OCF(CF₃)CF₂)qOCF₃ (average molecular weight 2140) |
| 27 | C₁₈H₃₇CH(COOH)C₂H₄CooCH₂CF₂(OC₂F₄)ₚ(OF₂) qCF₂CH₂OH (average molecular weight 2368) |

Obtained Compounds 1 to 27 were employed as lubricants to manufacture the magnetic recording medium structure as shown in Fig. 1.

Example 1 The non-magnetic support member was coated with Co-Ni alloy by diagonal evaporation so that a ferromagnetic metal material having a small thickness of 100 nm was formed. The non-magnetic was polyethylene terephthalate film having a thickness of 10 µm. Then, the surface of the thin metal magnetic film was coated with carbon by sputtering so that a protective film having a thickness of 15 nm was formed. Then, the non-magnetic was cut to have a width of 8 mm. Then, Compound 1 shown in Table 1 was dissolved in toluene at a ratio of 0.2 wt%. The obtained solution was uniformly applied to the surface of the protective film so that a lubricant layer was formed. As a result, a tape-type magnetic recording medium (hereinafter called a " magnetic tape") was manufactured.

### Example 2

A magnetic tape was manufactured similarly to Example 1 except for Compound shown in Table 1 which was employed as the lubricant.

### Example 3

A magnetic tape was manufactured similarly to Example 1 except for Compound 3 shown in Table 1 which was employed as the lubricant.

### Example 4

A magnetic tape was manufactured similarly to Example 1 except for Compound 4 shown in Table 1 which was employed as the lubricant.

### Example 5

A magnetic tape was manufactured similarly to Example 1 except for Compound 5 shown in Table 1 which was employed as the lubricant.

### Example 6

A magnetic tape was manufactured similarly to Example 1 except for Compound 6 shown in Table 1 which wa s employed as the lubricant.

### Example 7

A magnetic tape was manufactured similarly to Example 1 except for Compound 7 shown in Table 1 which was employed as the lubricant.

### Example 8

A magnetic tape was manufactured similarly to Example 1 except for Compound 8 shown in Table 1 which was employed as the lubricant.

### Example 9

A magnetic tape was manufactured similarly to Example 1 except for Compound 9 shown in Table 1 which was employed as the lubricant.

### Example 10

A magnetic tape was manufactured similarly, to Example 1 except for Compound 10 shown in Table 1 which was employed as the lubricant.

### Example 11

A magnetic tape was manufactured similarly to Example 1 except for Compound 11 shown in Table 1 which was employed as the lubricant.

### Example 12

A magnetic tape was manufactured similarly to Example 1 except for Compound 12 shown in Table 1 which was employed as the lubricant.

### Example 13

A magnetic tape was manufactured similarly to Example 1 except for Compound 13 shown in Table 1 which was employed as the lubricant.

### Example 14

A magnetic tape was manufactured similarly to Example 1 except for Compound 14 shown in Table 1 which was employed as the lubricant.

### Example 15

A magnetic tape was manufactured similarly to Example 1 except for Compound 15 shown in Table 1 which was employed as the lubricant.

### Example 16

A magnetic tape was manufactured similarly to Example 1 except for Compound 16 shown in Table 1 which was employed as the lubricant.

### Example 17

A magnetic tape was manufactured similarly to Example 1 except for Compound 17 shown in Table 1 which was employed as the lubricant.

### Example 18

A magnetic tape was manufactured similarly. to Example 1 except for Compound 18 shown in Table 1 which was employed as the lubricant.

### Example 19

A magnetic tape was manufactured similarly to Example 1 except for Compound 19 shown in Table 1 which was employed as the lubricant.

### Example 20

A magnetic tape was manufactured similarly to Example 1 except for Compound 20 shown in Table 1 which was employed as the lubricant.

### Comparative Example 1

A magnetic tape was manufactured similarly to Example 1 except for Compound 21 shown in Table 2 which was employed as the lubricant.

### Comparative Example 2

A magnetic tape was manufactured similarly to Example 1 except for Compound 22 shown in Table 2 which was employed as the lubricant.

### Comparative Example 3

A magnetic tape was manufactured similarly to Example 1 except for Compound 23 shown in Table 2 which was employed as the lubricant.

### Comparative Example 4

A magnetic tape was manufactured similarly to Example 1 except for Compound 24 shown in Table 2 which was employed as the lubricant.

### Comparative Example 5

A magnetic tape was manufactured similarly to Example 1 except for Compound 25 shown in Table 2 which was employed as the lubricant.

### Comparative Example 6

A magnetic tape was manufactured similarly to Example 1 except for Compound 26 shown in Table 2 which was employed as the lubricant.

### Comparative Example 7

A magnetic tape was manufactured similarly to Example 1 except for Compound 27 shown in Table 2 which was employed as the lubricant.

The friction coefficient. still durability and shuttle durability of each of the manufactured magnetic tapes were measured. The measurement was performed under the condition that the temperature was 25°C and the humidity was 60 %, that the temperature was - 5°C and that the temperature was 40°C and the humidity was 80 %.

The still durability was evaluated by measuring attenuation time taken for the output in a pause state to be reduced by 3 dB.

The shuttle durability was evaluated by performing a shuttle operation for 2 minutes in each experiment to count the number of shuttling operations until the output was reduced by 3 dB.

Results of evaluation of the characteristics of the magnetic tapes are shown in Tables 3, 4 and 5. Results of evaluation of the characteristics of Examples 1 to 10 are shown in Table 3, those of Examples 11 to 20 are shown in Table 4 and those of Comparative Examples 1 to 10 are shown in Table 5.

**Table 3**

| | Condition | Fricti-on Coefficie-nt | Still Durability (minute) | Shuttle Durability (number of times) |
|---|---|---|---|---|
| Example 1 | 25°C60%RH 40°C80%RH -5°C | 0.22 0.21 0.23 | >120 >120 >120 | >150 >100 >100 |
| Example 2 | 25°C60%RH 40°C80%RH -5°C | 0.21 0.21 0.22 | >120 >120 >120 | >150 >100 >100 |
| Example 3 | 25°C60%RH 40°C80%RH -5°C | 0.22 0.22 0.22 | >120 >120 >120 | >150 >150 >100 |
| Example 4 | 25°C60%RH 40°C80%RH -5°C | 0.20 0.22 0.22 | >120 >120 >120 | >150 >150 >150 |
| Example 5 | 25°C60%RH 40°C80%RH -5°C | 0.20 0.21 0.22 | >120 >120 >120 | >150 >150 >150 |
| Example 6 | 25°C60%RH 40°C80%RH -5°C | 0.20 0.22 0.22 | >120 >120 >120 | >150 >150 >150 |
| Example 7 | 25°C60%RH 40°C80%RH -5°C | 0.23 0.24 0.24 | >120 >120 >120 | >150 >150 >150 |
| Example 8 | 25°C60%RH 40°C80%RH -5°C | 0.23 0.25 0.23 | >120 >60 >60 | >150 >150 >150 |
| Example 9 | 25°C60%RH 40°C80%RH -5°C | 0.19 0.21 0.21 | >120 >120 >120 | >150 >150 >150 |
| Example 10 | 25°C60%RH 40°C80%RH -5°C | 0.20 0.22 0.21 | >120 >120 >120 | >150 >150 >150 |

**Table 4**

| | Condition | Friction Coefficien-t | Still Durability.(minute) | Shuttle Durability,(number of times) |
|---|---|---|---|---|
| Example 11 | 25°C60%RH 40°C80%RH -5°C | 0.21 0.23 0.22 | >120 >120 >120 | >150 >150 >150 |
| Example 12 | 25°C60%RH 40°C80%RH -5°C | 0.20 0.21 0.23 | >120 >120 >120 | >150 >150 >150 |
| Example 13 | 25°C60%RH 40°C80%RH -5°C | 0.20 0.22 0.23 | >120 >120 >120 | >150 >100 >100 |
| Example 14 | 25°C60%RH 40°C80%RH -5°C | 0.19 0.21 0.22 | >120 >120 >120 | >150 >150 >150 |
| Example 15 | 25°C60%RH 40°C80%RH -5°C | 0.19 0.21 0.23 | >120 >120 >120 | >150 >150 >150 |
| Example 16 | 25°C60%RH 40°C80%RH -5°C | 0.19 0.20 0.22 | >120 >120 >120 | >150 >150 >150 |
| Example 17 | 25°C60%RH 40°C80%RH -5°C | 0.21 0.21 0.21 | >120 >120 >120 | >150 >150 >150 |
| Example 18 | 25°C60%RH 40°C80%RH -5°C | 0.20 0.20 0.23 | >120 >120 >120 | >150 >150 >150 |
| Example 19 | 25°C60%RH 40°C80%RH -5°C | 0.20 0.21 0.22 | >120 >120 >120 | >150 >150 >150 |
| Example 20 | 25°C60%RH 40°C80%RH -5°C | 0.19 0.20 0.24 | >120 >120 >120 | >150 >150 >150 |

**Table 5**

| | Condition | Friction Coefficient | Still Durability (minute) | Shuttle Durability (number of times) |
|---|---|---|---|---|
| Comparative Example 1 | 25°C60%RH 40°C80%RH -5°C | 0.24 0.26 0.25 | >120 60 6 | >150 60 6 |
| Comparative Example 2 | 25°C60%RH 40°C80%RH -5°C | 0.22 0.25 0.24 | >120 60 6 | >150 60 6 |
| Comparative Example 3 | 25°C60%RH 40°C80%RH -5°C | 0.21 0.24 0.26 | >120 60 6 | >150 60 6 |
| Comparative Example 4 | 25°C60%RH 40°C80%RH -5°C | 0.21 0.23 0.26 | >120 60 6 | >150 60 6 |
| Comparative Example 5 | 25°C60%RH 40°C80%RH -5°C | 0.20 0.22 0.25 | >120 60 6 | >150 60 6 |
| Comparative Example 6 | 25°C60%RH 40°C80%RH -5°C | 0.28 0.32 0.35 | >120 >120 >120 | >150 >150 >150 |
| Comparative Example 7 | 25°C60%RH 40°C80%RH -5°C | 0.25 0.28 0.31 | >120 >120 >120 | >150 >150 >150 |

The magnetic tapes according to Comparative Examples 1 to 5 encountered deterioration in the still durability and the shuttle durability under the condition of the low temperature and the condition of the high temperatures and the high humidity. The magnetic tapes according to Comparative Examples 6 and 7 encountered deterioration in the friction coefficient under the condition of the low temperature and the condition of the high temperatures and the high humidity. On the other hand. satisfactory results were obtained from the magnetic tapes according to Examples 1 to 20 and incorporating the monoeste monocarboxylic acid to serve as the lubricant because the friction coefficient the still durability and the shuttle durability did not deteriorate under the condition of the low temperature and the condition of the high temperatures and the high humidity.

Thus, a fact was confirmed that use of monoester monocarboxylic acid as the lubricant enables satisfactory characteristics to be obtained under a variety of conditions.

Residual quantities of the lubricants in the magnetic tapes after continuous movements of the tape were measured. The residual quantities were measured by moving a 20-minute tape 100 times at 5°C to measure reduction in the lubricant by using infrared spectrum after the movement of the tape. The residual quantities of the lubricants were calculated from ratios of residues of absorption of C-F bonds realized after the movement of the tapes with respect to absorption of C-F bonds before the tapes were moved. The residual quantities of the lubricants after the continuous movement of the tapes are shown in Table 6.

**Table 6**

| Material | Quantity of Residual Lubricant (%) |
|---|---|
| Example 1 | 78 |
| Example 2 | 80 |
| Example 3 | 82 |
| Example 4 | 80 |
| Example 5 | 81 |
| Example 6 | 81 |
| Example 7 | 85 |
| Example 8 | 80 |
| Example 9 | 81 |
| Example 10 | 98 |
| Example 11 | 95 |
| Example 12 | 90 |
| Example 13 | 96 |
| Example 14 | 95 |
| Example 15 | 90 |
| Example 16 | 91 |
| Example 17 | 84 |
| Example 18 | 80 |
| Example 19 | 83 |
| Example 20 | 78 |
| Comparative Example 6 | 50 |

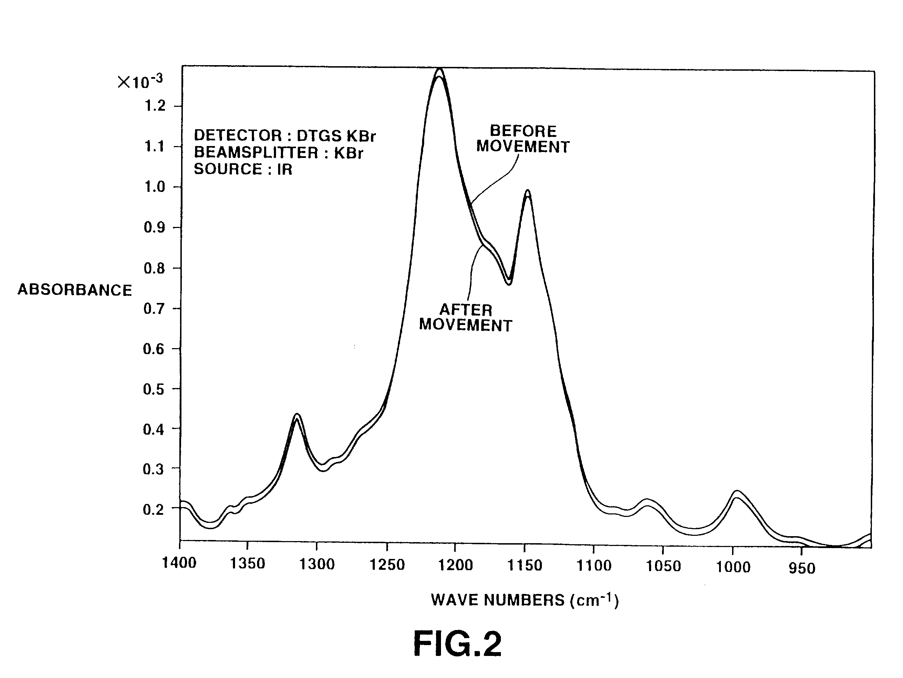

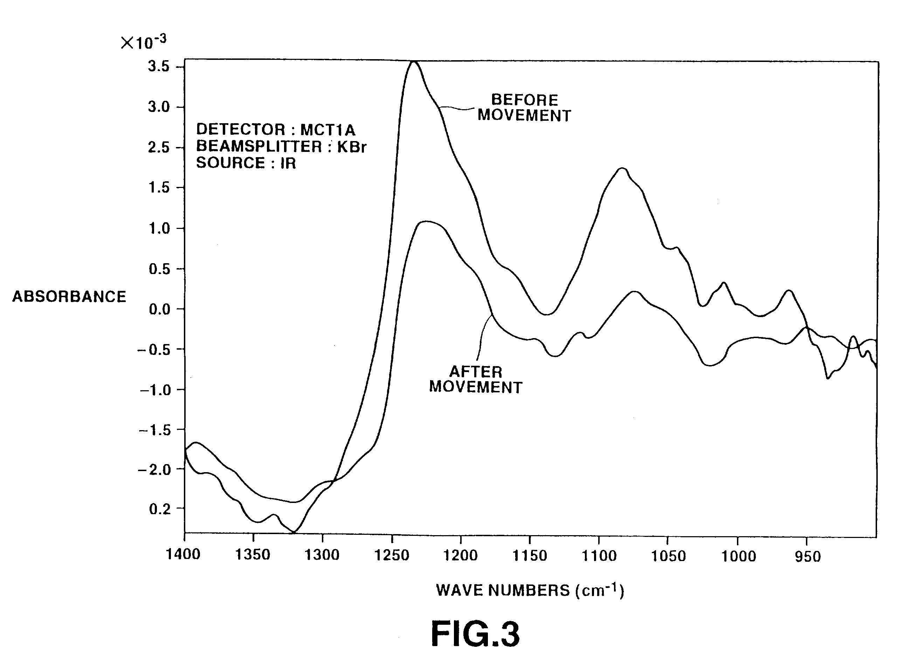

Fig. 2 is a graph showing an infrared spectrum indicating the quantities of the lubricant according to Example 10 before and after the movement of each tape. Fig. 3 is a graph showing an infrared spectrum indicating the quantities of the lubricant according to Comparative Example 6 before and after the movement of the tape.

Comparative Example 6 incorporating the conventional lubricant having the perfluoroether group encountered reduction in the absorption of C-F bonds. In this case, the quantity of the lubricant was reduced. On the other hand, Example 10 incorporating monoester monocarboxylic acid was substantially free from change in the absorption of C-F bonds after the repetitive movement of the tape.

When monoester monocarboxylic acid was used as the lubricant, the quantity of the lubricant was not substantially reduced even after use for a long time. Thus, an excellent lubricating effect can be maintained.

The solubility of each of the lu bricants according to Examples 1 to 20 and Comparative Examples 6 and 7 with respect to solvents. which were ethanol, toluene and fluorine solvent ("FLORINATE" manufactured by Sumitomo 3M) was evaluated. The evaluation was performed such that symbol ○ was given when the lubricant was easily dissolved in the solvent and × was given when the lubricant was not dissolved in the solvent. Results of evaluation of each lubricant are shown in Table 7.

**Table 7**

| Material | Ethanol | Acetone | Toluene | Fluorine |
|---|---|---|---|---|
| | | | | Solvent |
| Example 1 | ○ | ○ | ○ | ○ |
| Example 2 | ○ | ○ | ○ | ○ |
| Example 3 | ○ | ○ | ○ | ○ |
| Example 4 | ○ | ○ | ○ | ○ |
| Example 5 | ○ | ○ | ○ | ○ |
| Example 6 | ○ | ○ | ○ | ○ |
| Example 7 | ○ | ○ | ○ | ○ |
| Example 8 | ○ | ○ | ○ | ○ |
| Example 9 | ○ | ○ | ○ | ○ |
| Example 10 | ○ | ○ | ○ | ○ |
| Example 11 | ○ | ○ | ○ | ○ |
| Example 12 | ○ | ○ | ○ | ○ |
| Example 13 | ○ | ○ | ○ | ○ |
| Example 14 | ○ | ○ | ○ | ○ |
| Example 14 | ○ | ○ | ○ | ○ |
| Example 15 | ○ | ○ | ○ | ○ |
| Example 16 | ○ | ○ | ○ | ○ |
| Example 17 | ○ | ○ | ○ | ○ |
| Example 18 | ○ | ○ | ○ | ○ |
| Example 19 | ○ | ○ | ○ | ○ |
| Example 20 | ○ | ○ | ○ | ○ |
| Comparative | × | × | × | ○ |
| Example 6 | | | | |
| Comparative | × | × | × | ○ |
| Example 7 | | | | |

The lubricants according to Comparative Examples 6 and 7 have significant solubility with respect to the fluorine solvent. However, the solubility with respect to ethanol, acetone and toluene is unsatisfactory. Examples 1 to 20 has significant solubility which respect to each of the solvents, such as the fluorine solvent, ethanol, acetone and toluene.

Therefore, monoester monocarboxylic acid according to each of the Examples 1 to 20 can be applied by using the solvent, such as ethanol, acetone or toluene. Thus, an adverse influence on the environment can be eliminated.

Since the magnetic recording medium according to the present invention contains monoester monocarboxylic acid serving as the lubricant, a satisfactory lubricating characteristic can be maintained under a variety of conditions for use. Moreover, the lubricating characteristic can be maintained for a long time.

As a result, according to the present invention, a magnetic recording medium having an excellent movement characteristics, wear resis tance and durability can be provided.

Although the invention has been described in its preferred form and structure with a certain degree of particularity, it is understood that the present disclosure of the preferred form can be changed in the details of construction and in the combination and arrangement of parts without departing from the spirit and the scope of the invention as hereinafter claimed.

## Claims

1. A magnetic recording medium comprising:
a non-magnetic support members; and
a thin-film layer formed on said non-magnetic support members, the thin-film layer incorporates at least a magnetic layer, wherein
said thin-film layer contains a lubricant which is monoester monocarboxylic acid expressed by General Formula (1) : 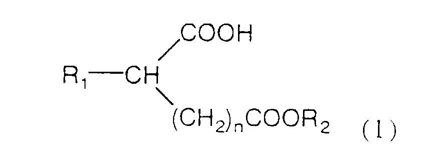
where R₁ is an aliphatic alkyl group or an aliphatic alkenyl group, R₂ is a fluoroalkyl group, a fluoroalkenyl group. an aliphatic alkyl group or an aliphatic alkenyl group and n is 0 or a positive integer.

2. A magnetic recording medium according to claim 1, wherein said thin-film layer incorporates a magnetic layer, a protective layer formed on said magnetic layer and a lubricant layer formed on said protective layers, and said lubricant is contained in said lubricant layer.

3. A magnetic recording medium according to claim 2, wherein said magnetic layer is a thin metal layer formed by coating a ferromagnetic metal material, and said protective layer is made of carbon.

4. magnetic recording medium according to claim 1, wherein the number of carbon atoms in the aliphatic alkyl group or the aliphatic alkenyl group contained in the monoester monocarboxylic acid and represented by R₁ is 6 to 30.

5. A magnetic recording medium according to claim 1, wherein the number of carbon atoms in the fluoroalkyl group, fluoroalkenyl group, aliphatic alkyl group or the aliphatic alkenyl group contained in the monoester monocarboxylic acid and represented by R₂ is 6 to 30.

6. A magnetic recording medium according to claim 1, wherein n in monoester monocarboxylic acid is 0 to 20.

7. A method of manufacturing a magnetic recording medium comprising the steps of:
forming a magnetic layer on a non-magnetic support member;
forming a protective laye r on said magnetic layer: and
forming a lubricant layer containing monoester monocarboxylic acid serving as a lubricant and expressed by General Formula (1) on said protective layer: 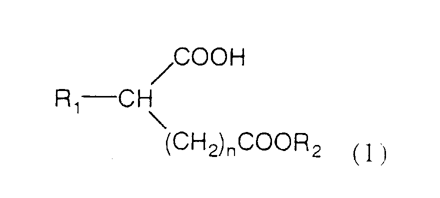
where R₁ is an aliphatic alkyl group or an aliphatic alkenyl group, R₂ is a fluoroalkyl group, a fluoroalkenyl group, an aliphatic alkyl group or an aliphatic alkenyl group and n is 0 or a positive integer.

8. A method of manufacturing a magnetic recording medium according to claim 7, wherein said lubricant layer is formed by applying solution in which the lubricant is dissolved in hydrocarbon solvent.
